Europäisches Patentamt

European Patent Office

Office européen des brevets

(19)

(11) Veröffentlichungsnummer: **0 030 264**
**B1**

(12) **EUROPÄISCHE PATENTSCHRIFT**

(45) Veröffentlichungstag der Patentschrift: **13.06.84**

(51) Int. Cl.³: **D 06 B 3/04,** D 06 B 21/00

(21) Anmeldenummer: **80106428.8**

(22) Anmeldetag: **22.10.80**

(54) Verfahren zum Imprägnieren von Fa"sersträngen und Faserbändern.

(30) Priorität: **08.12.79 DE 2949435**

(43) Veröffentlichungstag der Anmeldung:
**17.06.81 Patentblatt 81/24**

(45) Bekanntmachung des Hinweises auf die Patenterteilung:
**13.06.84 Patentblatt 84/24**

(84) Benannte Vertragsstaaten:
**FR GB IT**

(56) Entgegenhaltungen:
**FR - A - 2 226 217**
**FR - A - 2 422 447**
**GB - A - 579 074**
**GB - A - 986 664**
**US - A - 3 241 343**
**US - A - 3 905 327**
**US - A - 3 981 162**
**US - A - 4 073 974**

(73) Patentinhaber: **Messerschmitt-Bölkow-Blohm**
**Gesellschaft mit beschränkter Haftung**
**Robert-Koch-Strasse**
**D-8012 Ottobrunn (DE)**

(72) Erfinder: **Brunsch, Klaus, Dipl.-Ing.**
**Asternweg 11**
**D-8190 Weidach (DE)**
Erfinder: **Sperber, Franz, Ing.grad.**
**Pater-Petrus-Strasse 18**
**D-8200 Rosenheim (DE)**

Courier Press, Leamington Spa, England.

## Beschreibung

Die Erfindung bezieht sich auf ein Verfahren nach dem Oberbegriff des Anspruchs 1.

Ein solches Verfahren ist bereits durch die US—A—3 905 327 bekannt. Bei diesem Verfahren werden die Faserstränge zunächst durch eine Unterdruckzone geführt und dann in einer anschließenden Kunstharzkammer mit unter Druck stehendem Kunstharz getränkt. Dieses Verfahren weist den Nachteil auf, daß die Fasern beim Durchlaufen der Unterdruckzone nicht völlig von Lufteinschlüssen befreit werden können und diese dann unter der Druckeinwirkung des Kunstharzes in der Kunstharzkammer als Luftbläschen in den Fasern verbleiben und verdichtet werden. Beim Druchgang durch eine weitere, an die Kunstharzkammer anschließende Unterdruckzone ist es dann nicht möglich, die in den getränkten Fasern verbliebenen Luftbläschen zu entfernen.

Der Erfindung liegt deshalb die Aufgabe zugrunde, ein Verfahren nach dem Oberbegriff des Anspruchs 1 so auszuführen, daß mit Sicherheit die Luft aus den Fasersträngen oderbändern entfernt wird und der Imprägniervorgang technisch einwandfrei beherrschbar ist.

Die Lösung dieser Aufgabe erfolgt mit einem Verfahren entsprechend den Merkmalen des kennzeichnenden Teils des Anspruchs 1.

Vorteilhafte Ausbildungen der Erfindung sind in den Unteransprüchen wiedergegeben.

Die Erfindung schafft ein Verfahren, mit dem mit Sicherheit je nach dem an die erste Kammer angelegten Unterdruck ein luftblasenfreier Faserstrang in der letzten Kammer mit dem Kunstharz getränkt werden kann. Dabei wird durch den gasförmigen, reaktiven Verdünner in der dritten, mittleren Kammer die von der Unterdruckkammer verbliebene Restluftmenge herausgespült und der Faserstrang vor dem Tränken absolut luftfrei gemacht. In der letzten Kammer ist dann nur ein geringer Überdruck von wenigen bar zum Tränken der Fasern erforderlich.

Beim erfindungsgemäßen Imprägnieren können die Verfahrens-parameter Unterdruck, Verdünner-und Harzdruck und Ziehgeschwindigkeit der Fasern so eingestellt werden, daß die aus dem Überdruck des Harzes bestehende Rückstromgeschwindig-in etwa gleich ist der Abzugsgeschwindigkeit des Tränkgutes. Zur Unterst ützung einer kontinuierlichen und einwandfreien Tränkung kann mit Hilfe von vor der Kunstharzkammer angeordneten Sichtfenstern eine lichtoptische Regelung der oben angeführten Verfahrensparameter erfolgen. Mittels des Brechungsindexes eines durch die Sichtfenster geführten Lichtstrahles ist die Grenzlinie des Harzrücklaufes einwandfrei zu steuern.

Das erfindungsgemäße Verfahren ist anwendbar sowohl für flache Imprägniervorrichtungen mit nebeneinander angeordneten Faserkanälen zum Laminieren von im wesentlichen flachen Bauteilen als auch für runde Imprägniervorrichtungen mit radialen Faseröffnungen, die direkt mit einer Wickelmaschine integriert werden.

Es können mit dem erfindungsgemäßen Verfahren sowohl Faserstränge und Faserbänder zur sofortigen Verwendung für Bauteile aus faserverstärktem Kunststoff als auch Prepregs zur späteren Verwendung hergestellt werden. Durch die Einstellung der Verfahrensparameter kann der Harz/Faseranteil in bisher kaum erreichbarer Genauigkeit dem Verwendungszweck entsprechend eingestellt werden.

Weitere Vorteile der Erfindung ergeben sich aus der nachfolgenden Beschreibung von Ausführungsbeispielen der Erfindung anhand der Zeichnung. Es zeigen:

Fig. 1 einen Schnitt durch eine erste Ausführungsform einer Imprägniervorrichtung;

Fig. 2 einen Schnitt quer durch die Vorrichtung längs der Linie II—II der Fig. 1;

Fig. 3 einen Schnitt quer durch in der Vorrichtung befindliche Kammern entsprechend den Linien III—III der Fig. 1;

Fig. 4 einen Schnitt längs der Linie IV—IV der Fig. 3 mit der Draufsicht auf eine Kammer;

Fig. 5 einen Schnitt durch eine Ausführungsform einer Imprägniervorrichtung, die um eine Welle herumgeführt ist, und

Fign. 6 und 7 im Querschnitt bzw. in der Draufsicht eine weitere Ausführungsform einer um eine Welle herumgeführten Imprägniervorrichtung.

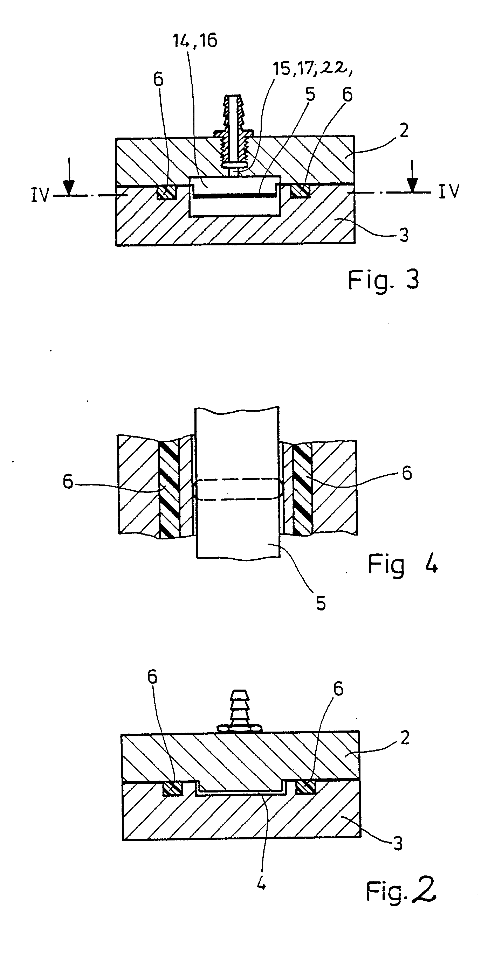

Eine Vorrichtung 1 entsprechend dem in den Fig. 1 bis 4 gezeigten Ausführungsbeispiel besteht aus einem Oberteil 2 und einem Unterteil 3, zwischen denen ein schlitzförmiger Kanal 4 zum Imprägnieren von nebeneinander angeordneten Fasersträngen oder Faserbändern 5 freigelassen ist. Während in den Fig. 1 und 3 das zu tränkende Faserband 5 mit dargestellt ist, ist letzteres in der Fig. 2 fortgelassen, um den Kanal 4 besser zu zeigen. Das Oberteil 2 ragt zur Abdichtung des Kanals 4 in das Unterteil 3 hinein, weiterhin sind beide Teile durch Dichtleisten 6, z.B. aus Hartschaum, gegeneinander und gegen den Außendruck abgedichtet. Ober-und Unterteil 2 und 3 sind mittels Schrauben verbunden. Zur Glättung des Faserbandes 5 vor dem Einführen in den Kanal 4 ist am Oberteil 2 eine Walze 8 angesetzt, welche; das Faserband 5 mit Hilfe einer Feder 9 auf eine Dichtleiste 10 drückt. Die Walze 8 mit Dichtleiste 10 sind zweckmäßig aus hartelastischem Material, z.B. Hartgummi. Die Walze 8 ist in am Oberteil 2 angeordneten Laschen in Langlöchern 12 gelagert. Im Unterteil 3 ist ein kurzes Stück hinter dem Eintritt des Faserbandes 5 in den Kanal 4 eine Dichtleiste 13 angeordnet, durch die der Kanal 4 in der Längsrichtung gegenüber dem Außendruck abgedichtet ist. In einem ausreichenden Abstand vom Eintrittsende des Kanals 4 befindet sich eine Kammer 14, die sich sowohl in das Oberteil 2 als auch in das Unterteil 3 erstreckt und in die eine Bohrung 15 hineinführt. In einiger Entfernung von der Kammer 14 ist eine weitere Kammer 16 angeordnet, in die ebenfalls eine Bohrung 17 hineinführt. In beide Bohrungen 15 und 17 sind Schlauchnippel 18 eingeschraubt, an die nicht dargestellte Schläuche angesetzt werden können. An die Kammer wird 14 wird eine Vakuumpumpe angeschlossen und in die Kammer 16 wird unter Druck stehendes Kunstharz eingeleitet. Zwischen der Unterdruckkammer 14 und der Kunstharzkammer 16 befindet sich eine weitere Kammer 21, in die eine Bohrung 22 hineinführt. Durch die Bohrung 22 wird gasförmiger reaktiver Verdünner unter Druck eingebracht. Der Verdünner dient dadurch als Sperre zwischen dem Unterdruck in der Kammer 14 und dem unter Druck stehenden Harz in der Kammer 16. Dadurch, daß die Restluftmenge durch den gasförmigen Verdünner ausgespült wird, wird eine vollständige Entlüftung und Durchtränkung des Faserbandes 5 erzielt. Bei der Verwendung von z.B. Polyesterharz dient dampfförmiges Styrol als reaktiver Verdünner.

Nachfolgend soll die Funktionsweise der Vorrichtung 1 beschrieben werden. Ein Faserband 5 wird bei abgenommenem Oberteil 2 auf das Unterteil so aufgelegt, daß noch ein Stück das Unterteil überragt. Dann wird das Oberteil 2 mit der Walze 8 aufgesetzt und mit den Schrauben festgezogen. Wenn die Schlauchnippel 18 mit den zugehörigen Schläuchen versehen sind, kann das Faserband 5 durch Ziehen in Richtung des Pfeiles 18 imprägniert werden. Dabei wird das Faserband 5 in der Kammer 14 entlüftet, dann mit reaktivem Verdünner in der Kammer 21 durchspült und nachher in der Kammer 16 mit Kunstharz getränkt. Der Unterdruck durch die Bohrung 15, die Mediumzufuhr durch die Bohrungen 17, 22 und die Ziehgeschwindigkeit in Richtung des Pfeiles 18 können so geregelt werden, daß sich der Harzfilm stets zwischen den beiden Kammern 16 und 21 befindet. Dadurch wird eine stets gleichmäßige Tränkung des Faserbandes 5 erreicht und gleichzeitig vermieden, daß Harz in die Kammern 21 und 14 eintritt. Die Beobachtung des Harzfilmes kann durch ein Sichtfenster im Oberteil 2 erfolgen und dementsprechend die Höhe des Unterdruckes, des Verdünner-und Harzdruckes und der Ziehgeschwindigkeit manuell eingestellt werden. Es ist jedoch zur Erzielung einer hohen Imprägniergeschwindigkeit rationeller, auch im Unterteil ein Sichtfenster einzubauen. Damit kann eine lichtoptische Regelung der Verfahrensparameter erfolgen, bei der durch die Sichtfenster ein Lichtstrahl hindurchgeleitet wird, dessen Brechungsindex den Tränkungszustand des Faserbandes 5 und damit die Grenzlinie des Harzrücklaufes anzeigt.

Die Vorrichtung 1 kann auch in einfacherer Form, z.B. zum Tränken von runden Fasersträngen, aus einem Stück hergestellt werden, wobei anstelle des Kanals 4 runde Faseröffnungen in die Vorrichtung eingebohrt werden und die Kammern durch seitlich abzudichtende Querbohrungen erzeugt werden. Andererseits besteht auch die Möglichkeit, mehrere Kanäle oder Öffnungen in einer einzigen Vorrichtung anzuordnen, um dadurch verschiedenartige Faserstränge oder Faserbänder gleichzeitig imprägnieren zu können.

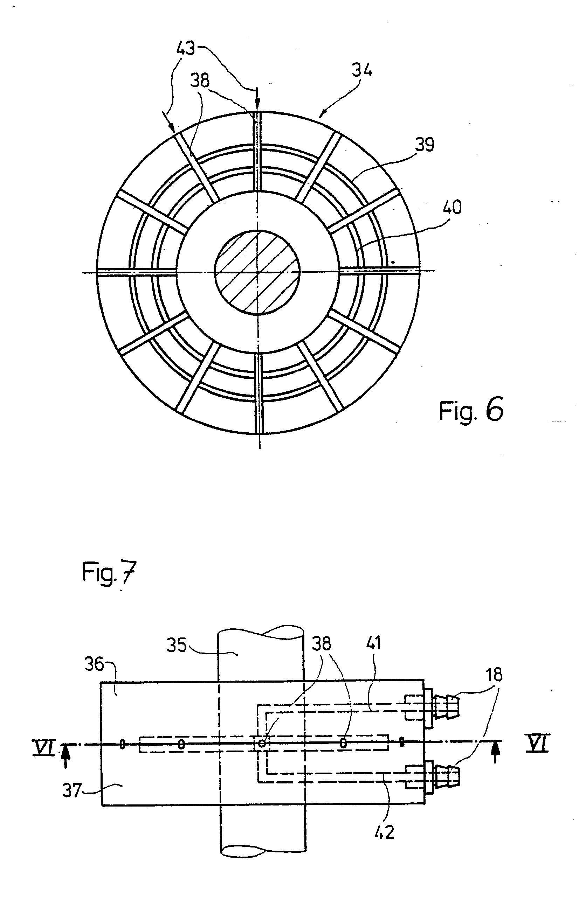

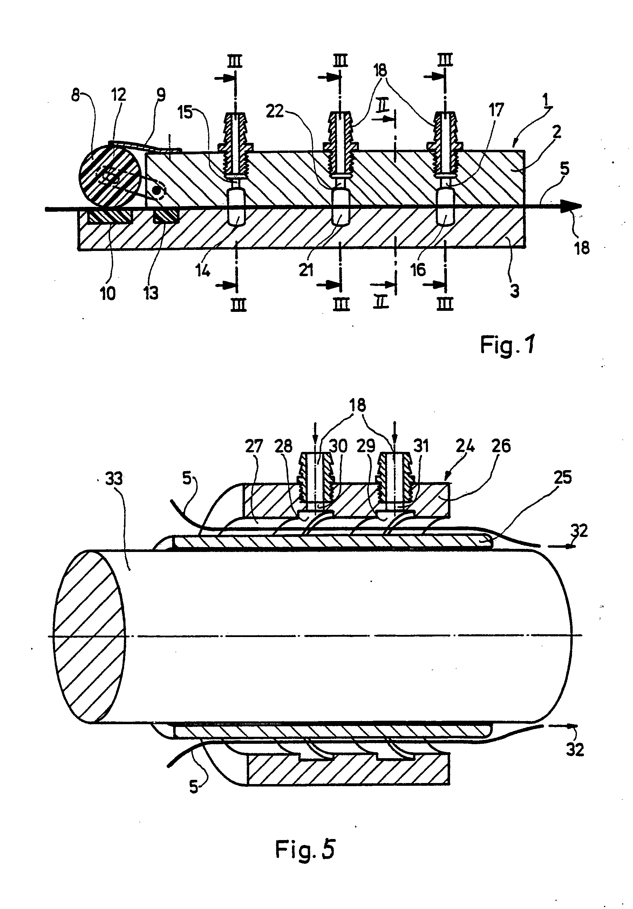

Andere Ausführungsformen der Imprägniervorrichtung sind in den Fign. 5 bis 7 schematisch dargestellt. In der Fig. 5 ist eine rohrförmige Imprägniervorrichtung 24 gezeigt, die aus einem inneren Rohr 25 und einem äußeren Rohr 26 besteht, die dichtend aufeinander geschoben werden und in nicht dargestellter Weise miteinander verbunden und abgedichtet sind. Innerhalb des Rohres 26 sind am Umfang verteilt eine Anzahl von Schlitzen oder offenen Bohrungen 27 angeordnet, die sich zu Kammern 28 und 29 erweitern, die mit Bohrungen 30 und 31 verbunden sind, welche in Schlauchnippel 18 einmünden. Entsprechend dem vorstehend gezeigten Ausführungsbeispiel ist die Kammer 28 einem Unterdruck ausgesetzt, und die Kammer 29 ist mit unter Druck stehendem Harz gefüllt. Die beiden dargestellten Faserstränge 5 werden in Richtung der Pfeile 32 durch die Schlitze 27 gezogen und können unmittelbar nach dem Imprägnieren auf einen Wickeldorn 33 gewickelt werden. Bei dieser Figur wurde auf die Darstellung der zwischen den beiden Kammern 28, 29 angeordneten, weiteren Kammer zur Zuführung eines reaktiven Lösungsmittels entsprechend Fig. 1 verzichtet. Zwischen den beiden Rohren 25 und 26 angeordnete Dichtungsringe oder sonstige Maßnahmen zur Abdichtung sind ebenfalls nicht dargestellt. Es besteht selbstverständlich auch die Möglichkeit, Sichtfenster vorzusehen.

Die in den Fign. 6 und 7 dargestellte Imprägniervorrichtung 34 gestattet das Imprägnieren von einer großen Anzahl von Rovings, die auf einen Wickeldorn 35 aufgewickelt werden. Die Imprägniervorrichtung 34, die über den Wickeldorn 35 geschoben und in nicht dargestellter Weise auf einer Wickelmaschine befestigt wird, besteht aus zwei zusammengesetzten runden Platten 36 und 37, in die radiale Bohrungen 38 zum Durchführen von nicht dargestellten Rovings eingebracht sind. Zwischen dem äußeren und dem inneren Durchmesser der Platten 36 und 37 sind Kanäle 39 und 40 eingedreht, die über Bohrungen 41 und 42 mit Schlauchnippeln 18 verbunden sind. Der Kanal 39 ist wiederum einem Unterdruck ausgesetzt und in den Kanal 40 wird unter Druck stehendes Harz geleitet, während der dazwischen liegende Kanal (ebenfalls nicht dargestellt) mit dem reaktiven Verdünner beschickt wird. Die Rovings werden in Richtung von Pfeilen 43 in die Bohrungen 38 eingeführt, wobei ihre Fasern in bereits vorstehend beschriebener Weise im Kanal 39 entlüftet, im Kanal 40 mit Harz getränkt und in dem dazwischen liegenden, nicht dargestellten Kanal mit reaktivem Verdünner bespült werden.

## Patentansprüche

1. Verfahren zum Imprägnieren von Faserstängen oder Faserbändern (5), bei dem die Faserstränge oder-bänder durch eine Vorrichtung (1) in mindestens einem durchgehenden Kanal (4) mit mindestens zwei, im Abstand zueinander angeordneten Kammern (14, 16) geführt werden, von denen die in Durchführungsrichtung der Fasern erste Kammer (14) einem Unterdruck ausgesetzt und die zweite (16) mit unter Druck stehendem flüssigen Kunstharz gefüllt wird, dadurch gekennzeichnet, daß die Faserstränge oder-bänder (5) zwischen der Unterdruck-und der Kunstharzkammer (14, 16) durch eine weitere Kammer (21) geführt werden, die mit einem gasförmigen reaktiven Verdünner beschickt wird.

2. Verfahren nach Anspruch 1, dadurch gekennzeichnet, daß die Faserstränge oder Faserbänder (5) vor der Fasereintrittsseite des Kanals (4) mittels einer Walze (8) geglättet werden.

3. Verfahren nach Anspruch 1 oder 2, dadurch gekennzeichnet, daß durch mindestens ein Sichtfenster der Harzrücklauf vor der Kunstharzkammer (16) beobachtet wird.

4. Verfahren nach einem der Ansprüche 1 bis 3, dadurch gekennzeichnet, daß die Faserstränge oder Faserbänder (5) in einer kastenförmigen Vorrichtung (1) durch nebeneinander angeordnete Kanäle (4) geführt werden.

5. Verfahren nach den Ansprüchen 1 bis 3, dadurch gekennzeichnet, daß die Faserstränge oder Faserbänder (5) in einer runden Vorrichtung (34) durch radial angeordnete Kanäle (38) geführt werden.

6. Verfahren nach den Ansprüchen 1 bis 3, dadurch gekennzeichnet, daß das jeweilige Medium (Unterdruck, Harz, Verdünner) in jeweils eine Kammer (14, 16, 21) geleitet wird.

7. Verfahren nach den Ansprüchen 1 bis 5, dadurch gekennzeichnet, daß das jeweilige Medium (Unterdruck, Harz, Verdünner) durch nur eine Bohrung (41, 42) gleichzeitig in miteinander verbundene Kammern (39, 40) geleitet wird.

## Revendications

1. Procédé pour l'imprégnation d'écheveaux de fibres ou de rubans de fibres (5), dans lequel on fait passer les écheveaux ou les rubans de fibres dans au moins un canal (4) traversant un dispositif (1) comportant au moins deux chambres (14, 16) disposées éloignées l'une de l'autre, la première chambre (14) étant soumise à une pression réduite dans le sens du passage des fibres, et la deuxième (16) étant remplie avec une résine synthétique liquide se trouvant sous pression, caractérisé par le fait qu'on fait passer les écheveaux ou les rubans de fibres (5) à travers une autre chambre (21) placée entre la chambre (14) sous pression réduite et la chambre (16) contenant la résine synthétique, et qui est remplié d'un diluant réactif gazeux.

2. Procédé selon la revendication 1, caractérisé par le fait que les écheveaux de fibres ou les rubans de fibres (5) sont rendus lisses au moyen d'un rouleau (8), avant le côté d'entrée des fibres du canal (4).

3. Procédé selon les revendications 1 ou 2, caractérisé par le fait que le retour de la résine avant la chambre (16) contenant la résine synthétique est observé par au moins un hoblot.

4. Procédé selon l'une quelconque des revendications 1 à 3, caractérisé par le fait qu'on fait passer les écheveaux de fibres ou les rubans de fibres (5) à travers des canaux (4) disposés l'un à côté de l'autre dans un dispositif (1) en forme de caisse.

5. Procédé selon les revendications 1 à 3, caractérisé par le fait qu'on fait passer les écheveaux de fibres ou les rubans de fibres (5) à travers des canaux (38) disposés radialement dans un dispositif (34) rond.

6. Procédé selon les revendications 1 à 3, caractérisé par le fait que chaque milieu (pression réduite, résine, diluant) est amené respectivement dans une chambre (14, 16, 21).

7. Procédé selon les revendications 1 à 5, caractérisé par le fait que chaque milieu (pression réduite, résine, diluant) est amené par un seul trou (41, 42) simultanément dans des chambres (39, 40) mises en communication l'une avec l'autre.

## Claims

1. A method of impregnating fibre strands or fibre bands (5), in which the fibre strands or bands are conducted through a device (1) in at least one continuous channel (4) having at least two chambers (14, 16) located at a spacing from one another, of which the chamber (14) which is first, in the conveyance direction of the fibres, is exposed to section and the second (16) is filled with liquid synthetic resin standing under pressure, characterised in that the fibre strands or bands (5) are conducted, between the suction chamber and the synthetic resin chamber (14, 16), through a further chamber (21) which is charged with a gaseous reactive thinner.

2. A method according to claim 1, characterised in that the fibre strands or fibre bands (5) are smoothed in advance of the fibre entry side of the channel (4) by means of a roller (8).

3. A method according to claim 1 or 2, characterised in that the resin reflux is observable in front of the synthetic resin chamber (16) through at least one viewing window.

4. A method according to one of claims 1 to 3, characterised in that the fibre strands or fibre bands (5) are conducted in a box-shaped device (1) through channels (4) which are arranged side-by-side.

5. A method according to claims 1 to 3, characterised in that the fibre strands or fibre bands (5) are conducted in a round device (34) through radially arranged channels (38).

6. A method according to claims 1 to 3, characterised in that the respective medium (underpressure, resin, thinner) is conducted into one chamber (14, 16, 21) at a time.

7. A method according to claims 1 to 5, characterised in that the respective medium (underpressure, resin, thinner) is conducted through only one bore (41, 42) simultaneously into chambers (39, 40) which are connected together.

14,16

15,17,22,

6

5

6

2

IV ⊽ — · — — · — IV

3

Fig. 3

6 6

5

Fig 4

6 6

2

3

4

Fig. 2

Fig. 6

Fig. 7

Fig. 1

Fig. 5